# EUROPÄISCHE PATENTSCHRIFT

(11) **EP 3 292 592 B1**
(45) Veröffentlichungstag und Bekanntmachung des Hinweises auf die Patenterteilung: **10.05.2023**
(21) Anmeldenummer: 16723052.3
(22) Anmeldetag: 03.05.2016
(51) Int. Cl.: H01R 11/28

(54) **BATTERIEKLEMME UND VERFAHREN ZUR HERSTELLUNG EINER BATTERIEKLEMME**
BATTERY TERMINAL AND METHOD FOR PRODUCING A BATTERY TERMINAL
COSSE DE BATTERIE ET SON PROCÉDÉ DE FABRICATION

(30) Priorität: 06.05.2015 DE 102015107044
(43) Veröffentlichungstag der Anmeldung: 14.03.2018
(73) Patentinhaber: HELLA GmbH & Co. KGaA, 59552 Lippstadt (DE)
(72) Erfinder: ZIMMERMANN, Katrin, 59494 Soest (DE); UNTERHALT, Marco, 33154 Salzkotten (DE)
(86) Internationale Anmeldenummer: PCT/EP2016/059879
(87) Internationale Veröffentlichungsnummer: WO 2016/177723

(56) Entgegenhaltungen:
- EP-A2- 2 112 716
- WO-A1-2014/129534
- DE-A1-102007 032 837
- US-A- 5 088 941
- US-A- 5 879 202
- US-A1- 2012 196 492

## Beschreibung

Die vorliegende Erfindung betrifft eine Batterieklemme gemäß dem Oberbegriff des Anspruchs 1 sowie ein Verfahren zur Herstellung einer derartigen Batterieklemme.

Eine Batterieklemme der vorgenannten Art ist aus der EP 1 675 221 A1 bekannt. Die darin beschriebene Batterieklemme umfasst eine auf einen Pol einer Batterie aufschiebbare Aufnahme sowie Schraubmittel für die klemmende Befestigung der Aufnahme an dem Pol der Batterie. Die Schraubmittel umfassen dabei eine in eine Mutter einbringbare Schraube, wobei die Schraube in der Aufbringrichtung der Aufnahme beziehungsweise in Längsrichtung des Pols einschraubbar ist. Diese Richtung entspricht in der Regel der vertikalen Richtung, so dass bei derartigen Batterieklemmen die Befestigung auch als vertikale Verschraubung bezeichnet wird. Bei der EP 1 675 221 A1 ist die Aufnahme an einem ersten Stanzbiegeteil ausgebildet. Die Batterieklemme umfasst zwei weitere Stanzbiegeteile, die in das erste Stanzbiegeteil von der Seite eingeschoben werden können. Durch Festziehen der Schraube, die durch die beiden weiteren Stanzbiegeteile hindurchragt, werden zwei von der Aufnahme ausgehende Schenkel des ersten Stanzbiegeteils aufeinander zu bewegt, wodurch der Durchmesser der Aufnahme verkleinert und diese an dem Pol klemmend festgelegt wird.

Darüber hinaus beschreiben die Dokumente US 5,088,941 sowie US 5,879,202 ähnliche Batterieklemmen. Überdies offenbaren WO 2014/129 534 A1 als auch US 2015/196492 A1 ähnliche Batterieklemmen.

Als nachteilig bei diesem Stand der Technik erweist sich die Komplexität der Batterieklemme. Einerseits ist die aus vielen Einzelteilen bestehende Klemme teuer in der Herstellung. Andererseits ergibt sich durch die Vielzahl der Einzelteile auch ein großer Montageaufwand.

Weiterhin sind aus dem Stand der Technik Batterieklemmen in Stanzbiegetechnik bekannt, bei denen die Schraubmittel senkrecht zur Aufbringrichtung der Aufnahme beziehungsweise horizontal betätigbar oder einschraubbar sind. Diese Gestaltung hat den Nachteil, dass die Schraubmittel nur schlecht zugänglich sind.

Das der Erfindung zugrunde liegende Problem ist die Schaffung einer Batterieklemme der eingangs genannten Art, bei der die Schraubmittel gut zugänglich sind und die trotzdem vergleichsweise einfach aufgebaut ist. Weiterhin soll ein Verfahren zur Herstellung einer derartigen Batterieklemme angegeben werden.

Dies wird erfindungsgemäß durch eine Batterieklemme der eingangs genannten Art mit den kennzeichnenden Merkmalen des Anspruch 1 erreicht sowie durch ein Verfahren mit den Merkmalen des Anspruchs 9 erreicht. Die Unteransprüche betreffen bevorzugte Ausgestaltungen der Erfindung.

Gemäß Anspruch 1 ist vorgesehen, dass die Klemmmittel mindestens ein Klemmelement umfassen, das mit dem Stanzbiegeteil verbunden ist und/oder an diesem anliegt. Dadurch wird die Komplexität der Batterieklemme reduziert. Es kommen insbesondere nur wenige Zusatzteile wie Schraubmittel und mindestens ein Klemmelement zum Einsatz, die teilweise auch bei geschmiedeten Klemmen verwendet werden. Trotz der Einfachheit der erfindungsgemäßen Batterieklemme kann mit ihr eine vertikale Verschraubung realisiert werden, die eine gute Zugänglichkeit der Schraubmittel gewährleistet.

Es ist vorgesehen, dass die Batterieklemme bis auf die Schraubmittel und das mindestens eine Klemmelement als einstückiges Stanzbiegeteil ausgebildet ist. Dadurch wird die Batterieklemme in ihrer Komplexität deutlich reduziert. Die Ausbildung der Batterieklemme als Stanzbiegeteil bietet einen deutlichen Gewichtsvorteil gegenüber aus dem Stand der Technik bekannten Batterieklemmen. Weiterhin kann bei einer erfindungsgemäßen Batterieklemme die Komplexität der Geometrie verringert sein.

Erfindungsgemäß umfasst mindestens eine Klemmelement eine geneigte Fläche, die einen Winkel ungleich 0° und ungleich 90° mit der Aufbringrichtung einschließt, vorzugsweise einen Winkel zwischen 10° und 40°, insbesondere einen Winkel zwischen 20° und 30°. Weiterhin ist vorgesehen, dass die Schraubmittel mindestens eine geneigte Fläche umfassen, die einen Winkel ungleich 0° und ungleich 90° mit der Aufbringrichtung einschließt, vorzugsweise einen Winkel zwischen 10° und 40°, insbesondere einen Winkel zwischen 20° und 30°. Die Batterieklemme umfasst zwei Klemmelemente mit jeweils einer geneigten Fläche, die einen Winkel ungleich 0° und ungleich 90° mit der Aufbringrichtung einschließen, wobei die beiden Klemmelemente vorzugsweise an voneinander abgewandten Seiten des Stanzbiegeteils angeordnet sind, wobei auch die Schraubmittel zwei geneigte Flächen umfassen können, die einen Winkel ungleich 0° und ungleich 90° mit der Aufbringrichtung einschließen, wobei die beiden geneigten Flächen der Schraubmittel vorzugsweise einander gegenüberliegend angeordnet sind. Vorzugsweise kann dabei die geneigte Fläche des mindestens einen Klemmelements an der mindestens einen geneigten Fläche der Schraubmittel anliegen und mit dieser für die klemmende Befestigung der Aufnahme an dem Pol der Batterie zusammenwirken. Auf diese Weise können trotz der wenig komplexen Geometrie des einstückigen Stanzbiegeteils Klemmmittel für die Befestigung der Aufnahme an dem Pol der Batterie realisiert werden.

Es besteht die Möglichkeit, dass die Schraubmittel eine Schraube mit einem Kopf und einem Gewindeabschnitt sowie eine Mutter umfassen, wobei die mindestens eine geneigte Fläche der Schraubmittel an dem Kopf der Schraube oder an der Mutter angeordnet sein kann. Insbesondere wird dabei die mindestens eine geneigte Fläche an demjenigen Teil der Schraubmittel angeordnet sein, das sich während des Schraubvorgangs nicht dreht. Dies sind bei dem Einschrauben der Schraube in die Mutter die Mutter und bei dem Aufschrauben der Mutter auf die Schraube der Kopf der Schraube.

Die Aufnahme ist seitlich, insbesondere in einer Richtung senkrecht zur Aufbringrichtung, geöffnet beziehungsweise weist eine Öffnung auf, wobei das Stanzbiegeteil zwei Schenkel aufweist, die an die Öffnung der Aufnahme anschließen und von der Aufnahme wegragen. Dabei ist das mindestens eine Klemmelement an einem der Schenkel des Stanzbiegeteils angeordnet, wobei vorzugsweise an jedem der beiden Schenkel ein Klemmelement angeordnet ist. Ein Zusammenwirken der geneigten Flächen der Klemmelemente mit den geneigten Flächen der Schraubmittel führt damit unmittelbar zu einem Aufeinanderzubewegen der Schenkel und damit zur klemmenden Befestigung der Aufnahme auf dem Pol.

Das mindestens eine Klemmelement ist mit einem der Schenkel des Stanzbiegeteils fest verbunden über eine Verprägung mit einem der Schenkel verbunden ist. Dies erleichtert die Montage der Batterieklemme, weil für das mindestens eine Klemmelement kein zusätzlicher Montageschritt erforderlich ist.

Es kann weiterhin vorgesehen sein, dass das Stanzbiegeteil mindestens einen Halteabschnitt für die Schraubmittel umfasst. Insbesondere kann dabei der mindestens eine Halteabschnitt des Stanzbiegeteils an einem der Schenkel angeordnet sein. Durch diese Gestaltung wird die Führung der Schraube von geeigneten Abschnitten des Stanzbiegeteils übernommen.

Es besteht die Möglichkeit, dass die Batterieklemme einen Anschlussabschnitt für ein Kabel oder einen Batteriesensor umfasst, der insbesondere an dem Stanzbiegeteil ausgebildet ist, wobei vorzugsweise der Anschlussabschnitt auf der von den Schenkeln abgewandten Seite von der Aufnahme wegragt, insbesondere in die von den Schenkeln abgewandte Richtung. Auch der Anschlussabschnitt kann auf diese Weise in das Stanzbiegeteil integriert werden, so dass die gesamte Batterieklemme bis auf die Schraubmittel einstückig ausgebildet werden kann.

Gemäß Anspruch 8 ist vorgesehen, dass das mindestens eine Klemmelement während des Stanzens und/oder Biegens des Stanzbiegeteils mit diesem verbunden wird.

Erfindungsgemäß wird in dem für die Herstellung des Stanzbiegeteils erfolgenden Stanzprozess über eine Verprägung eine Verbindung zwischen dem mindestens einen Klemmelement und dem Stanzbiegeteil realisiert. Dadurch wird die Herstellung der Batterieklemme deutlich vereinfacht.

Anhand der beigefügten Zeichnungen wird die Erfindung nachfolgend näher erläutert. Dabei zeigt:
- Fig. 1: eine Seitenansicht einer erfindungsgemäßen Batterieklemme;
- Fig. 2: eine Draufsicht auf die Batterieklemme gemäß Fig. 1 ohne Schraubmittel;
- Fig. 3: eine gegenüber Fig. 1 um 90° gedrehte Seitenansicht der Batterieklemme;
- Fig. 4: einen Schnitt gemäß den Pfeilen IV - IV in Fig. 2;
- Fig. 5: eine Draufsicht auf ein Stanzbiegeteil einer erfindungsgemäßen Batterieklemme nach dem Stanzen und vor dem Biegen;
- Fig. 6: das Stanzbiegeteil gemäß Fig. 5 nach dem Biegen.

In den Figuren werden gleiche oder funktional gleiche Teile mit gleichen Bezugszeichen versehen.

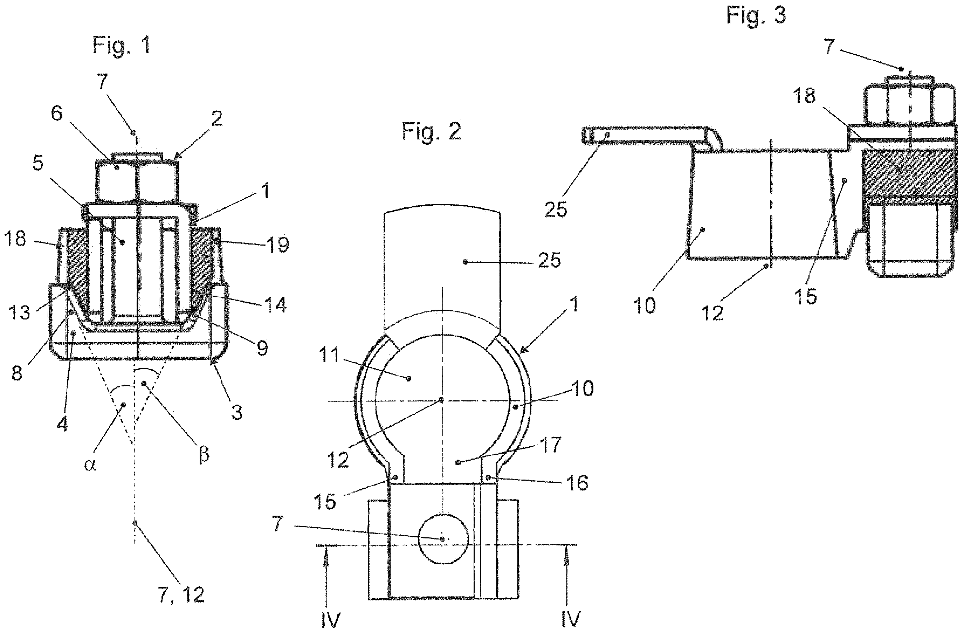

Die in den Fig. 1 bis Fig. 4 abgebildete Ausführungsform einer Batterieklemme umfasst ein einstückiges Stanzbiegeteil 1 sowie Schraubmittel 2. Die Schraubmittel 2 umfassen eine Schraube 3 mit einem Kopf 4 und einem Gewindeabschnitt 5 sowie eine Mutter 6, in die der Gewindeabschnitt 5 eingeschraubt werden kann. Die Zylinderachse 7 des Gewindeabschnitts 5 ist in Fig. 1, Fig. 2 und Fig. 3 eingezeichnet.

Das Stanzbiegeteil 1 besteht zumindest abschnittsweise aus einem elektrisch leitenden Material, insbesondere aus Metall, beispielsweise aus Kupfer oder einer Kupferlegierung.

Auf der dem Gewindeabschnitt 5 zugewandten Seite des Kopfes 4 sind zwei einander gegenüberliegende geneigte Flächen 8, 9 vorgesehen, die mit der axialen Richtung des Gewindeabschnitts 5 beziehungsweise dessen Zylinderachse 7 einen Winkel α einschließen, der in dem abgebildeten Ausführungsbeispiel zwischen 10° und 40°, insbesondere zwischen 20° und 30° beträgt (siehe Fig. 1). Fig. 1 zeigt, dass die geneigten Flächen 8, 9 auf den Innenseiten des den Gewindeabschnitt 5 umgebenden Randes des Kopfes 4 angeordnet sind.

Das Stanzbiegeteil 1 umfasst eine Aufnahme 10, die auf einen nicht abgebildeten konischen Pol einer Batterie aufgeschoben werden kann. Die Aufnahme 10 wird dabei von einem um mehr als 270°, vorzugsweise mehr als 300° umlaufenden Abschnitt des Stanzbiegeteils 1 gebildet, der einen inneren konischen Raum 11 für den in der Regel konischen Pol freilässt. Der umlaufende Abschnitt weist die Form eines Mantels eines Teilkegelstumpfs auf. Die Kegelachse 12 des inneren konischen Raums 11 der Aufnahme 10 erstreckt sich dabei parallel zur Zylinderachse 6 des Gewindeabschnitts 5 der Schraube 3 (siehe Fig. 2).

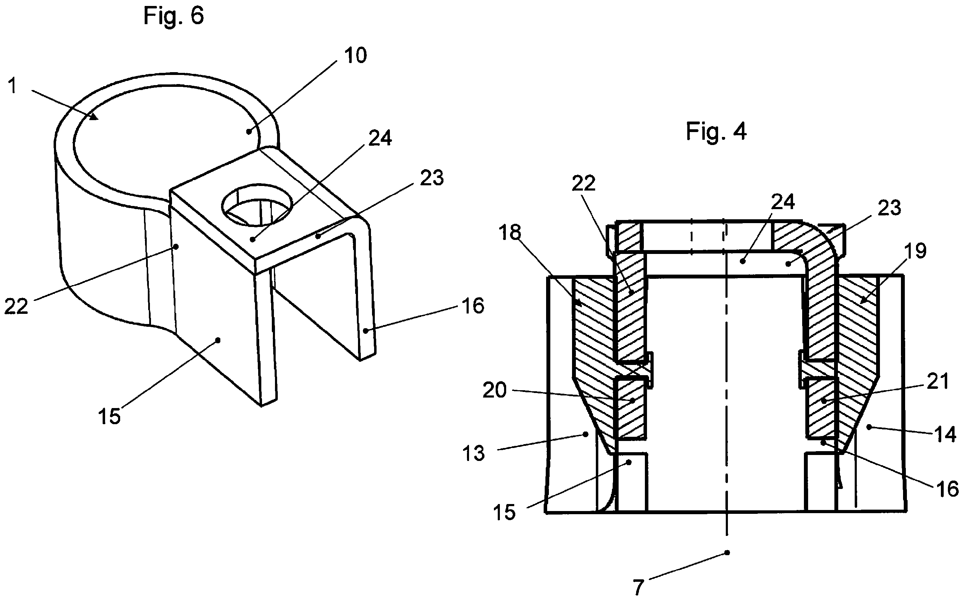

Die Batterieklemme umfasst weiterhin als Klemmmittel zwei Klemmelemente 18, 19, die auf zwei voneinander abgewandten Seiten des Stanzbiegeteils 1 angeordnet sind. Jedes dieser Klemmelemente 18, 19 weist eine geneigte Flächen 13, 14 auf, die auf von dem Stanzbiegeteil 1 abgewandten Außenseiten der Klemmelemente 18, 19 angeordnet sind (siehe Fig. 1 und Fig. 4). Die geneigten Flächen 13, 14 schließen mit der Zylinderachse 7 des Gewindeabschnitts 5 beziehungsweise mit der Kegelachse 12 des inneren konischen Raums 11 der Aufnahme 10 einen Winkel β ein, der in dem abgebildeten Ausführungsbeispiel 10° und 40°, insbesondere zwischen 20° und 30° beträgt (siehe Fig. 1).

Die Klemmelemente 18, 19 können zumindest abschnittsweise aus Metall oder anderen geeigneten Materialien bestehen.

Die Klemmelemente 18, 19 sind an Schenkeln 15, 16 angeordnet, die sich von der Aufnahme 10 wegerstrecken (siehe beispielsweise Fig. 2). Die Aufnahme 10 ist einseitig offen, da sie von dem beispielsweise über etwa 300° umlaufenden Abschnitt des Stanzbiegeteils 1 gebildet wird. Von den Endbereichen der einseitigen Öffnung 17 der Aufnahme 10 erstrecken sich die Schenkel 15, 16 in die gleiche Richtung (beispielsweise nach unten in Fig. 2).

Fig. 4 zeigt, dass von dem Klemmelementen 18, 19 jeweils ein Verbindungselement 20, 21, vorzugsweise jeweils ein Pilzkopfzapfen, ausgeht, das eines der Klemmelemente 18, 19 mit einem der Schenkel 15, 16 verbindet. Insbesondere ragt dabei das Verbindungselement 20, 21 durch den jeweiligen Schenkel 15, 16 nach innen hindurch. Die Verbindung zwischen den Klemmelementen 18, 19 und den Schenkeln 15, 16 kann jeweils eine Verprägung sein, die während des Stanzens des Stanzbiegeteils 1 erstellt wird.

Es besteht die Möglichkeit, anstelle der, insbesondere verprägten, Verbindungselemente andere Verbindungsmittel vorzusehen. Beispielsweise könnten die Klemmelementen 18, 19 auch mit den Schenkeln 15, 16 des Stanzbiegeteils 1 verklebt sein.

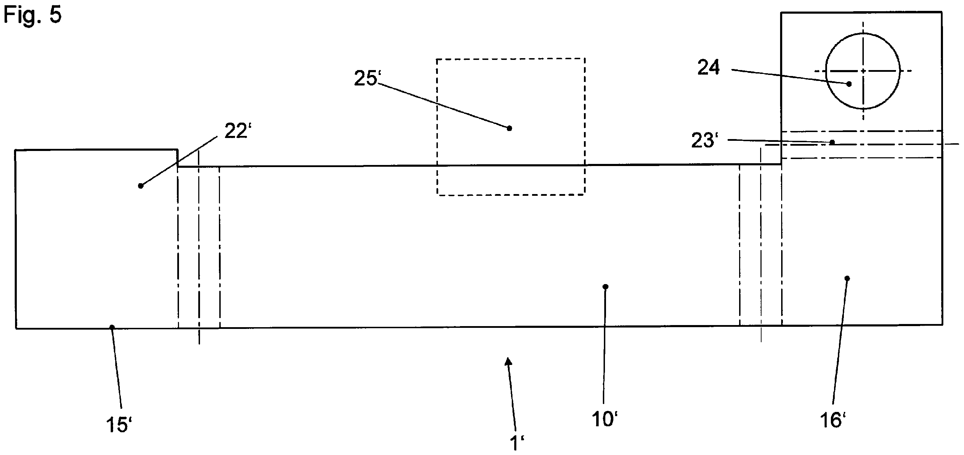

Fig. 5 zeigt einen Stanzzuschnitt 1' eines Stanzbiegeteils 1 einer die wesentlichen Bestandteile der Erfindung aufweisenden erfindungsgemäßen Batterieklemme nach dem Stanzen aber vor dem Biegen. Bei diesem Stanzzuschnitt 1' ist mittig der die Aufnahme 10 bildende Abschnitt 10' ersichtlich, der durch das Biegen in die Form eines Mantels eines Teilkegelstumpfs gebracht wird. An diesen Abschnitt 10' schließen sich links und rechts in Fig. 5 die Schenkel 15, 16 an. Die die Schenkel 15, 16 bildenden Abschnitte 15', 16' des Stanzzuschnitts 1' erweitern sich an ihrem von dem mittigen Abschnitt 10' abgewandten Ende jeweils nach oben in Fig. 5.

Fig. 5 lässt sich weiterhin entnehmen, dass sich in dem Stanzzuschnitt 1 von den die Schenkel 15, 16 bildenden Abschnitten 15', 16' Abschnitte 22', 23' nach oben erstrecken. Der in Fig. 5 rechte Abschnitt 23' wird wie Fig. 6 verdeutlicht bei dem Biegen nach innen um etwa 90° umgebogen, so dass er einen Halteabschnitt 23 für die Schraubmittel 2 bildet. Der Halteabschnitt 23 überlappt dabei das nach oben ragende Ende des dem Abschnitt 22' des Stanzzuschnitts 1' entsprechenden Abschnitts 22, der nicht umgebogen ist. Der Halteabschnitt 23 des in Fig. 6 rechten Schenkels 16 weist eine Öffnung 24 auf (siehe auch Fig. 5). Durch die Öffnung 24 kann sich der Gewindeabschnitt 5 der Schraube 3 erstrecken (siehe auch Fig. 1 und Fig. 4).

Auf der von den Schenkeln 15, 16 abgewandten Seite der Aussparung 10 ist an dieser ein Anschlussabschnitt 25 für ein nicht abgebildetes Kabel oder einen nicht abgebildeten Batteriesensor angeordnet, der insbesondere Teil des einstückigen Stanzbiegeteils 1 ist (siehe insbesondere Fig. 2, Fig. 3 und Fig. 4). In Fig. 5 ist der diesen Anschlussabschnitt 25 bildende Abschnitt 25' des Stanzzuschnitts 1' lediglich gestrichelt angedeutet und in Fig. 6 nicht abgebildet. Im gebogenen Zustand des Stanzbiegeteils erstreckt sich der Anschlussabschnitt 25 in die von den Schenkeln 15, 16 abgewandte Richtung (siehe Fig. 3).

In dem in den Fig. 1 und Fig. 3 abgebildeten zusammengebauten Zustand der Batterieklemme befindet sich der Kopf 4 der Schraube 3 unten, wobei von dem Kopf 4 der Gewindeabschnitt 5 nach oben ragt. Das Stanzbiegeteil 1 liegt zusammen mit den Klemmelementen 18, 19 auf der dem Gewindeabschnitt 4 zugewandten Oberseite des Kopfes 4 auf. Insbesondere liegen dabei die nach außen zeigenden geneigten Flächen 13, 14 der Klemmelemente 18, 19 an den nach innen zeigenden geneigten Flächen 8, 9 des Kopfes 4 an (siehe insbesondere Fig. 1 und Fig. 4).

Der Gewindeabschnitt 5 ragt durch die Öffnung 24 hindurch nach oben in die Mutter 6, die auf der Oberseite des die Öffnung 24 aufweisenden Halteabschnitts 23 aufliegt.

Wenn die Aufnahme 10 auf den Pol einer Batterie aufgeschoben ist, kann durch Anziehen der Mutter 6 auf dem Gewindeabschnitt 5 die Mutter 6 nach unten in Fig. 1 bewegt werden. Dadurch gleiten die geneigten Flächen 13, 14 der Klemmelemente 18, 19 an den geneigten Flächen 8, 9 des Kopfes 4 der Schraube 3 entlang nach unten und nach innen. Durch diese Bewegung der geneigten Flächen 13, 14 nach innen werden auch die Schenkel 15, 16 nach innen aufeinander zu bewegt. Dadurch wird der Durchmesser der Aufnahme 10 verkleinert und der Pol der Batterie in der Aufnahme 10 geklemmt.

### Bezugszeichenliste

- 1: Stanzbiegeteil
- 1': Stanzzuschnitt
- 2: Schraubmittel
- 3: Schraube
- 4: Kopf der Schraube 3
- 5: Gewindeabschnitt der Schraube 3
- 6: Mutter
- 7: Zylinderachse des Gewindeabschnitts 5
- 8: geneigte Fläche am Kopf 4 der Schraube 3
- 9: geneigte Fläche am Kopf 4 der Schraube 3
- 10: Aufnahme
- 10': die Aufnahme 10 bildender Abschnitt des Stanzzuschnitts 1'
- 11: konischer Raum in der Aufnahme 10
- 12: Kegelachse des konischen Raums 11
- 13: geneigte Fläche an dem Klemmelement 18
- 14: geneigte Fläche an dem Klemmelement 19
- 15: Schenkel des Stanzbiegeteils 1
- 15': den Schenkel 15 bildender Abschnitt des Stanzzuschnitts 1'
- 16: Schenkel des Stanzbiegeteils 1
- 16': den Schenkel 16 bildender Abschnitt des Stanzzuschnitts 1'
- 17: einseitige Öffnung der Aufnahme 10
- 18: Klemmelement
- 19: Klemmelement
- 20: Verbindungselement am Klemmelement 18
- 21: Verbindungselement am Klemmelement 19
- 22: Abschnitt des Stanzbiegeteils 1
- 22': den Abschnitt 22 bildender Abschnitt des Stanzzuschnitts 1'
- 23: Halteabschnitt
- 23': den Halteabschnitt 23 bildender Abschnitt des Stanzzuschnitts 1'
- 24: Öffnung im Halteabschnitt 23
- 25: Anschlussabschnitt
- 25': den Anschlussabschnitt 25 bildender Abschnitt des Stanzzuschnitts 1'

## Patentansprüche

1. Batterieklemme, umfassend
- ein Stanzbiegeteil (1), an dem eine Aufnahme (10) ausgebildet ist, die in einer Aufbringrichtung auf einen Pol einer Batterie aufbringbar ist,
- Schraubmittel (2) für die klemmende Befestigung der Aufnahme (10) an dem Pol der Batterie, wobei die Schraubmittel (2) im Wesentlichen in der Aufbringrichtung der Aufnahme (10) betätigbar oder einschraubbar sind,
- Klemmmittel, die mit den Schraubmitteln (2) für die klemmende Befestigung der Aufnahme (10) an dem Pol der Batterie zusammenwirken, wobei die Klemmmittel zwei Klemmelemente (18, 19) umfassen, die mit dem Stanzbiegeteil (1) verbunden sind und/oder an diesem anliegen,
**dadurch gekennzeichnet,**
- **dass** die Batterieklemme bis auf die Schraubmittel (2) und das mindestens eine Klemmelement (18, 19) als einstückiges Stanzbiegeteil (1) ausgebildet ist,
- **dass** die zwei Klemmelemente (18, 19) jeweils einer geneigten Fläche (13, 14) umfasst, die einen Winkel (β) ungleich 0° und ungleich 90° mit der Aufbringrichtung einschließt,
- **dass** die Aufnahme (10) geöffnet ist beziehungsweise eine Öffnung (17) aufweist, wobei das Stanzbiegeteil (1) zwei Schenkel (15, 16) aufweist, die an die Öffnung (17) der Aufnahme (10) anschließen und von der Aufnahme (10) wegragen.
- **dass** das mindestens eine Klemmelement (18, 19) an einem der Schenkel (15, 16) des Stanzbiegeteils (1) angeordnet ist, wobei an jedem der beiden Schenkel (15, 16) ein Klemmelement (18, 19) angeordnet ist,
- **dass** das mindestens eine Klemmelement (18, 19) mit einem der Schenkel (15, 16) des Stanzbiegeteils (1) fest über eine Verprägung mit einem der Schenkel (15, 16) verbunden ist.
- **und dass** die Schraubmittel (2) mindestens eine geneigte Fläche (8, 9) umfassen, die einen Winkel (α) ungleich 0° und ungleich 90 ° mit der Aufbringrichtung einschließt.

2. Batterieklemme nach Anspruch 1, **dadurch gekennzeichnet, dass** der Winkel (β) der geneigten Fläche des Klemmelements (18,19) mit der Aufbringrichtung von 10° und 40°, insbesondere zwischen 20° und 30° einschließt.

3. Batterieklemme nach einem der Ansprüche 1 bis 2, **dadurch gekennzeichnet, dass** die Schraubmittel (2) eine Schraube (3) mit einem Kopf (4) und einem Gewindeabschnitt (5) sowie eine Mutter (6) umfassen.

4. Batterieklemme nach Anspruch 3, **dadurch gekennzeichnet, dass** die mindestens eine geneigte Fläche (8, 9) der Schraubmittel (2) an dem Kopf (4) der Schraube (3) oder an der Mutter (6) angeordnet ist.

5. Batterieklemme nach einem der Ansprüche 1 bis 4, **dadurch gekennzeichnet, dass** das Stanzbiegeteil (1) mindestens einen Halteabschnitt (22) für die Schraubmittel (2) umfasst.

6. Batterieklemme nach Anspruch 5, **dadurch gekennzeichnet, dass** der mindestens eine Halteabschnitt (22, 23) des Stanzbiegeteils (1) an einem der Schenkel (15, 16) angeordnet ist.

7. Batterieklemme nach einem der Ansprüche 1 bis 6, **dadurch gekennzeichnet, dass** die Batterieklemme einen Anschlussabschnitt (25) für ein Kabel oder einen Batteriesensor umfasst, der insbesondere an dem Stanzbiegeteil (1) ausgebildet ist, wobei vorzugsweise der Anschlussabschnitt (25) auf der von den Schenkeln (15, 16) abgewandten Seite von der Aufnahme (10) wegragt, insbesondere in die von den Schenkeln (15, 16) abgewandte Richtung.

8. Verfahren zur Herstellung einer Batterieklemme nach einem der Ansprüche 1 bis 7, **dadurch gekennzeichnet, dass** das mindestens eine Klemmelement (18, 19) während des Stanzens und/oder Biegens des Stanzbiegeteils (1) mit diesem verbunden wird.

## Claims

1. Battery terminal, comprising
- a pressed part (1) on which a holder (10) is formed that can be applied in an application direction to one pole of a battery,
- screw devices (2) for fastening the holder (10) by means of clamping to the pole of the battery, where the screw devices (2), can essentially be actuated or screwed in in the application direction of the holder (10),
- clamping devices that act together with the screw devices (2) for fastening the holder (10) by means of clamping to the pole of the battery, where the clamping devices comprise two clamping elements (18, 19) that are connected to the pressed part (1) and/or come into contact with the same, **characterized in that**
- with the exception of the screw devices (2) and the at least one clamping element (18, 19), the battery terminal is designed as a single-piece pressed part (1),
- the two clamping elements (18, 19) each comprise a tilted surface (13, 14) that includes an angle (β) unequal to 0° and unequal to 90° to the application direction,
- the holder (10) is open or features an aperture (7), where the pressed part (1) features two legs (15, 16) that border the aperture (17) of the holder (10) and extend away from the holder (10),
- the at least one clamping element (18, 19) is arranged at one of the legs (15, 16) of the pressed part (1), where a clamping element (18, 19) is arranged on each of the two legs (15, 16),
- the at least one clamping element (18, 19) is firmly connected to one of the legs (15, 16) of the pressed part (1) by means of a stamping with one of the legs (15, 16).
- the screw devices (2) comprise at least one tilted surface (8, 9) that include an angle (a) unequal to 0° and unequal to 90° to the application direction.

2. Battery terminal in accordance with Claim 1 **characterized in that** the angle (β) of the tilted surface of the clamping element (18, 19) to the application direction includes between 10° and 40°, in particular between 20° and 30°.

3. Battery terminal in accordance with one of Claims 1 to 2,
**characterized in that**
the screw devices (2) comprise a bolt (3) with a head (4) and a threaded section (5) and a nut (6).

4. Battery terminal in accordance with Claims 3,
**characterized in that**
the at least one tilted surface (8, 9) of the screw device (2) is arranged at the head (4) of the bolt (3) or at the nut (6).

5. Battery terminal in accordance with one of Claims 1 to 4,
**characterized in that**
the pressed part (1) comprises at least one retaining section (22) for the screw device (2).

6. Battery terminal in accordance with Claim 5,
**characterized in that**
that the at least one retaining section (22, 23) of the pressed part (1) is arranged at one of the legs (15, 16).

7. Battery terminal in accordance with one of Claims 1 to 6,
**characterized in that**
the battery terminal comprises a connection section (25) for a cable or a battery sensor that is formed in particular at the pressed part (1), where preferentially the connection section (25) on the side facing away from the legs (15, 16) extends away from the holder (10), in particular in the direction facing away from the legs (15, 16).

8. Method for manufacturing a battery terminal in accordance with one of Claims 1 through 7,
**characterized in that**
the at least one clamping element (18, 19) becomes connected to the pressed part during the pressing of the pressed part (1).

## Revendications

1. Cosse de batterie, complète
- une pièce pliée-découpée (1) sur laquelle est formé un logement (10) qui peut être appliqué sur un pôle d'une batterie dans un sens d'application,
- des moyens de vissage (2) pour la fixation par serrage du logement (10) sur le pôle de la batterie, les moyens de vissage (2) pouvant être actionnés ou vissés essentiellement dans le sens d'application du logement (10),
- des moyens de serrage qui agissent avec les moyens de vissage (2) pour la fixation par serrage du logement (10) sur le pôle de la batterie, les moyens de serrage comprenant deux éléments de serrage (18, 19) qui sont reliés à la partie pliée-découpée (1) et/ou s'appliquent contre celle-ci, **caractérisée en ce que**
- la borne de batterie est réalisée sous la forme d'une pièce pliée-découpée (1) d'un seul tenant, à l'exception des moyens de vissage (2) et d'au moins un élément de serrage (18, 19),
- les deux éléments de serrage (18, 19) comprennent chacun une surface inclinée (13, 14) formant un angle (β) différent de 0° et différent de 90° avec le sens d'application,
- le logement (10) est ouvert ou présente une ouverture (7), la pièce pliée-découpée (1) présentant deux branches (15, 16) qui se raccordent à l'ouverture (17) du logement (10) et dépassent du logement (10).
- au moins un élément de serrage (18, 19) est disposé sur l'une des branches (15, 16) de la pièce pliée-découpée (1), un élément de serrage (18, 19) étant disposé sur chacune des deux branches (15, 16),
- au moins un élément de serrage (18, 19) est relié fermement à l'une des branches (15, 16) de la pièce pliée-découpée (1) par estampage avec l'une des branches (15, 16).
- les moyens de vissage (2) comprennent au moins une surface inclinée (8, 9) formant un angle (a) différent de 0° et différent de 90° avec le sens d'application,

2. Cosse de batterie selon la revendication 1, **caractérisée en ce que** l'angle (β) de la surface inclinée de l'élément de serrage (18, 19) soit compris en particulier entre 20° et 30° avec le sens d'application de 10° et 40°.

3. Cosse de batterie selon l'une des revendications 1 à 2,
**caractérisée en ce que**
les moyens de vissage (2) comprennent une vis (3) avec une tête (4) et une partie filetée (5) ainsi qu'un écrou (6).

4. Cosse de batterie selon la revendication 3,
**caractérisée en ce que**
au moins une surface inclinée (8, 9) des moyens de vissage (2) est disposée sur la tête (4) de la vis (3) ou sur l'écrou (6).

5. Cosse de batterie selon l'une des revendications 1 à 4,
**caractérisée en ce que**
la pièce pliée-découpée (1) comprend au moins une section de retenue (22) pour les moyens de vissage (2).

6. Cosse de batterie selon la revendication 5,
**caractérisée en ce que**
au moins une section de retenue (22, 23) de la pièce pliée-découpé (1) est disposée sur l'une des branches (15, 16).

7. Cosse de batterie selon l'une des revendications 1 à 6,
**caractérisée en ce que**
la borne de batterie comprend une section de raccordement (25) pour un câble ou un capteur de batterie qui est formé en particulier sur la pièce pliée-découpée (1), la section de raccordement (25) s'écartant de préférence du logement (10) sur le côté opposé aux branches (15, 16), en particulier dans la direction opposée aux branches (15, 16).

8. Procédé de fabrication d'une cosse de batterie selon l'une des revendications 1 à 7,
**caractérisé en ce que**
au moins un élément de serrage (18, 19) est relié à la pièce pliée-découpée (1) pendant son découpage et/ou pliage.
